# EUROPÄISCHE PATENTSCHRIFT

(11) **EP 3 286 532 B1**
(45) Veröffentlichungstag und Bekanntmachung des Hinweises auf die Patenterteilung: **15.09.2021**
(21) Anmeldenummer: 16750601.3
(22) Anmeldetag: 14.04.2016
(51) Int. Cl.: G01H 9/00

(54) **VERFAHREN ZUM ERFASSEN VON VIBRATIONEN EINER VORRICHTUNG UND VIBRATIONSERFASSUNGSSYSTEM**
METHOD FOR DETECTING VIBRATIONS OF A DEVICE AND VIBRATION DETECTION SYSTEM
PROCÉDÉ DE DÉTECTION DE VIBRATIONS D'UN DISPOSITIF ET SYSTÈME DE DÉTECTION DE VIBRATIONS

(30) Priorität: 20.04.2015 DE 102015207134
(43) Veröffentlichungstag der Anmeldung: 28.02.2018
(73) Patentinhaber: Prüftechnik Dieter Busch GmbH, 85737 Ismaning (DE)
(72) Erfinder: HÖLZL, Roland, 81369 München (DE)
(86) Internationale Anmeldenummer: PCT/DE2016/100176
(87) Internationale Veröffentlichungsnummer: WO 2016/169554

(56) Entgegenhaltungen:
- EP-A1- 2 642 331
- DE-A1-102011 101 599
- DE-A1-102013 109 566
- DE-C1- 10 204 043
- JP-A- 2001 056 248
- US-A1- 2012 286 966
- US-A1- 2014 198 017

## Beschreibung

Die vorliegende Erfindung betrifft ein Verfahren zum Erfassen von Vibrationen einer Vorrichtung sowie ein Vibrationserfassungssystem, und insbesondere ein Vibrationserfassungssystem zum Ausführen des Verfahrens zum Erfassen von Vibrationen einer Vorrichtung.

Bei vielen Vorrichtungen wie Maschinen oder Windkraftanlagen treten während des Betriebs Vibrationen auf, die sich im Laufe der Zeit nicht nur für den Betrieb der Vorrichtung sondern auch für die Vorrichtung selbst als störend oder gar schädlich erweisen können. Es ist daher eine Überwachung der auftretenden Vibrationen notwendig. Hierzu ist es bekannt, Vibrationssensoren an Vorrichtungen anzuordnen, welche Vibrationen der Vorrichtungen erfassen. Die erfassten Vibrationen repräsentierende Messdaten können zwischengespeichert und zu einem späteren Zeitpunkt mittels eines Auslesegerätes ausgelesen werden oder sie können in Echtzeit an ein Gerät zu deren Auswertung übertragen werden.

Ein Verfahren zum Überwachen von Schwingungen rotierender Maschinen ist beispielsweise in der DE 10 2012 015 485 A1 offenbart.

Aus der DE 102 04 043 C1 gehen ein System und ein Verfahren zur Erfassung und Auswertung von mechanischen Schwingungssignalen hervor, welche die berührungslose Erfassung und automatische Auswertung der mechanischen Schwingungssignale ermöglichen. Das System weist einen Messlaser zur berührungslosen Erfassung von mechanischen Schwingungssignalen sowie eine Datenbrille zur Wiedergabe von Ergebnissen der Bewertung der Schwingungssignale auf.

In der WO 03/050626 A1 ist die Verwendung eines Systems mit einer Datenbrille zur Erstellung einer Dokumentation von Arbeitsvorgängen für die Darstellung in einem Augmented-Reality-System offenbart. Das System weist insbesondere Trackingmittel zur Bestimmung von Position und Ausrichtung einer Kamera relativ zu Punkten im Raum sowie einen mobilen Rechner zur Verarbeitung der von der Kamera aufgenommenen Bildinformationen und der Position und Ausrichtung der Kamera und zur Weitergabe der verarbeiteten Bildinformationen als Bilddaten und der Position und Ausrichtung der Kamera als Trackinginformation an ein entferntes Rechnersystem auf. Auch die WO 00/58799 A1 offenbart ein vergleichbares System zur Dokumentationsverarbeitung insbesondere für technische und industrielle Anwendungen.

Hingegen offenbart die EP 2 523 061 A1 ein Überwachungssystem mit einer Datenbrille, das für die Überwachung von Maschinen vorgesehen ist. Die Datenbrille verfügt über einen Sensor zum Erfassen der Anwesenheit einer Anlage innerhalb einer vorgegebenen Distanz zur Datenbrille.

Die JP 2001 056248 A offenbart einen Helm mit zwei Vibrationssensoren, einem Mikrocomputer und einem Anzeigemittel. Von den Vibrationssensoren gemessene Vibrationen des Helmes werden an den Mikrocomputer übertragen, von diesem verarbeitet und das Ergebnis wird am Anzeigemittel angezeigt.

Die DE 10 2011 101 599 A1 betrifft ein System zur Bestimmung von Körperschall bei einem Prüfling unter Verwendung eines Kommunikationsgeräts.

Aus der US 2012/0286966 A1 geht ein Verfahren zum Erfassen von Vibrationen einer Vorrichtung hervor, bei dem von einem Vibrationssensor Vibrationsdaten der Vorrichtung erfasst werden. Ein Kommunikationsmodul ermöglicht es dem Vibrationssensor mit einem Datenverwaltungssystem zu kommunizieren, auf welches der Benutzer mit einer Datenbrille ebenfalls Zugriff hat. Die EP 2 642 331 offenbart ein System mit einem dezentralen und verteilten Computersystem und einem optischen Gerät, das als Brille ausgebildet sein kann. Vom Computersystem erzeugte virtuelle Bilder werden von diesem an das optische Gerät, bzw. zu einer Anzeigeeinheit des optischen Geräts, übertragen. Bevor die virtuellen Bilder mittels der Anzeigeeinheit einem Benutzer angezeigt werden, können die Bilder von einem Bildprozessor der Anzeigeeinheit verarbeitet werden. Das Computersystem ist nicht mit dem optischen Gerät identisch bzw. weist das optische Gerät nicht auf, sondern ist von diesem getrennt und kommuniziert nur mit diesem.

Vor diesem Hintergrund ist es die Aufgabe der vorliegenden Erfindung, ein Verfahren sowie ein Vibrationsüberwachungssystem zu schaffen, welche die Überwachung von Vorrichtungen vereinfachen.

Diese Aufgabe wird durch das Verfahren mit den Merkmalen des Anspruchs 1 und durch das Vibrationsüberwachungssystem mit den Merkmalen des Anspruchs 7 gelöst. Bevorzugte Ausführungsformen sind Gegenstand der abhängigen Ansprüche.

Beim Gegenstand der vorliegenden Anmeldung wird vorteilhaft eine Datenbrille beim Erfassen von Vibrationen einer Vorrichtung vorgesehen, was die Überwachung der Vorrichtung vereinfacht. Im Unterschied zum herkömmlichen Überwachen von Vibrationen von Vorrichtungen, bei dem von Vibrationssensoren erfasste Werte an ein portables Handgerät übertragen und an diesem ausgewertet bzw. angezeigt werden, ermöglicht es die vorliegende Erfindung, auf ein derartiges Handgerät vollständig zu verzichten. Anstatt die Messwerte an ein Handgerät zu übermitteln, werden die Messwerte beim Gegenstand der vorliegenden Erfindung an die Datenbrille übermittelt, um dort von deren Datenverarbeitungsmittel, das wenigstens einen Prozessor aufweisen kann bzw. bei dem es sich um einen Miniaturcomputer oder Minicomputer handeln kann, verarbeitet zu werden. Aus der Verarbeitung der Messwerte, wobei es sich bei der

Verarbeitung insbesondere um einen einfachen Vergleich der Messwerte mit einem oder mehreren vorgegebenen Werten handeln kann, erzeugte Ergebnisse werden sodann am Anzeigemittel der Datenbrille angezeigt. Da ein übliches Handgerät für gewöhnlich ungefähr 1 kg wiegt und während dessen Bedienung bzw. während der Überwachung der Vorrichtung manuell gehalten und in der Praxis zudem immer wieder abgelegt und neu aufgenommen werden muss, so dass ein Benutzer, wie zum Beispiel eine Wartungsperson, leicht den Blick auf ein Display des Gerätes verliert, welches für den momentanen Arbeitsvorgang wichtige Informationen anzeigen kann, trägt ein Verfahren, das ohne ein Handgerät durchführbar ist, erheblich zur Vereinfachung der Erfassung bzw. Überwachung von Vibrationen einer Vorrichtung bei. Somit erlaubt die vorliegende Erfindung nicht nur ein ergonomisches, sondern durch den Wegfall des Handgerätes auch kostengünstigeres Überwachen von Vorrichtungen. Zudem bringt das Anzeigen des Ergebnisses der Verarbeitung der Messdaten im Anzeigemittel der Datenbrille wie bei der vorliegenden Erfindung gegenüber einem Anzeigen derselben in einem Display eines Handgerätes den Vorteil mit sich, dass diese Informationen für einen Benutzer der Datenbrille, wie zum Beispiel eine Wartungsperson, auch während unterschiedlicher Tätigkeiten stets sichtbar sind, so dass er seine Aufgaben auf bequeme und effektive Weise durchführen kann. Dabei können auf optischem Wege über das Anzeigemittel oder, sofern das Vibrationsüberwachungssystem und insbesondere die Datenbrille über einen Lautsprecher verfügt, auf akustischem Wege Hinweise, Warnungen und Alarme an den Benutzer oder die Wartungsperson ausgegeben werden. Rückmeldungen des Benutzers oder der Wartungsperson können dabei auf beliebige Weise, beispielsweise per Spracheingabe, Berührung oder Touch, Lidschlag sowie Augen- oder Kopfbewegungen erfolgen.

Bei dem Anzeigemittel kann es sich um ein sogenanntes Head-up-Display (HUD; wörtlich: "Kopf-oben-Anzeige") handeln, also um ein Anzeigesystem, bei dem der Träger der Datenbrille seine Kopfhaltung oder Blickrichtung beibehalten kann, weil Informationen in sein Sichtfeld projiziert werden. Erforderlichenfalls kann die Datenbrille weitere Einrichtungen aufweisen wie zum Beispiel wenigstens einen Datenspeicher und/oder wenigstens ein Raumwinkelmessmittel und/oder wenigstens einen Beschleunigungssensor und/oder wenigstens einen 9-Achssensor und/oder wenigstens ein Gyroskop und/oder wenigstens ein Inklinometer und/oder wenigstens einen Kompass und/oder wenigstens ein Touchpad und/oder wenigstens einen Knochenleistenlautsprecher und/oder wenigstens eine Schnittstelle, über die eine Verbindung zu einem lokalen Netzwerk und/oder zum Internet und/oder zu einem Navigationssystem herstellbar ist, und/oder wenigstens einen USB-Anschluss (Universal Serial Bus) und/oder wenigstens eine Stromquelle und/oder wenigstens eine Batterie und/oder wenigstens einen Akkumulator und/oder wenigstens eine berührungssensitive Stelle und/oder die Datenbrille ist für eine manuelle Modifikation oder Bedienung graphisch oder holographisch angezeigter Elemente eingerichtet und/oder die Datenbrille ist wenigstens teilweise mittels Augenlidschlägen steuerbar.

Eine Stromquelle in Form einer Batterie oder eines Akkumulators kann am Ende eines Bügels der Brille als Gegengewicht zum Anzeigemittel und gegebenenfalls dem Bilderfassungsmittel angeordnet sein. Für den Fall, dass eine Energiequelle der Datenbrille wie zum Beispiel eine Batterie oder ein Akkumulator eine unzureichende Kapazität aufweist, kann ein Zusatzgerät mit zusätzlichen Funkschnittstellen vorgesehen sein, das zum Beispiel am Gürtel der Wartungsperson tragbar und über ein Kabel mit der Datenbrille verbunden sein kann.

Berührungssensitive Stellen zum Bedienen der Datenbrille nach Art eines berührungssensitiven Bildschirms oder Touchscreens können beispielsweise an einem Bügel der Datenbrille angeordnet sein. Ferner können holographisch eingeblendete Bedienoberflächen wie Kacheln oder Icons hierfür vorgesehen sein, die vom Träger der Datenbrille als virtuelle Bedienelemente wahrgenommen werden. Ein derartiges virtuelles Bedienelement kann durch Drücken einer beliebigen Oberfläche betätigt werden. Graphische Elemente können beispielsweise durch Streichbewegungen mehrerer Finger auf einer beliebigen Oberfläche modifiziert werden. Auf diese Weise können Messkurven gezoomt und Skalen verändert werden. Hierzu gleicht eine Kamera, beispielsweise das Bilderfassungsmittel, Handbewegungen des Anwenders mit einem in der Datenbrille eingeblendeten Hologramm ab.

Eine derartige Kamera bzw. das Bilderfassungsmittel kann auch zur Beobachtung von Augenlidern eines Trägers der Datenbrille vorgesehen sein. Aus der Augenstellung des Trägers kann die Datenbrille erkennen, welcher Teil eines Hologramms gerade betrachtet wird. Die Auswahl eines betrachteten Objektes kann durch eine vorgegebene Anzahl von Lidschlägen erfolgen, beispielsweise durch einen Lidschlag oder zwei Lidschläge. Eine holographische oder virtuelle Bedienoberfläche kann für den Träger permanent sichtbar in dessen Sichtfeld eingeblendet sein, beispielsweise in verkleinerter Form in dessen linkem oberen Sichtfeldrand. Richtet der Träger seine Augen auf diese Bedienoberfläche oder ein anderes Objekt und führt einen bestimmten Lidschlag bzw. eine bestimmte Anzahl von Lidschlägen aus, so wird die Bedienoberfläche bzw. das Objekt vergrößert und wandert in das Zentrum des Blickfeldes. Dort können dann auf ähnliche Weise Unterobjekte ausgewählt und ausgeführt werden. Auch ein Ziehen von Objekten ist möglich, indem der Träger der Datenbrille beispielsweise ein Objekt betrachtet, einen Lidschlag ausführt und das Auge sodann in einen anderen Blickbereich führt. Hierbei wird das Objekt mit dem Auge mitgeführt. Ein nochmaliger Lidschlag verankert das Objekt an seinem neuen Ort. Als Augenführungshilfe, welche dem Träger der Datenbrille anzeigt, auf welches Objekt sein Auge gerade gerichtet ist, kann ein virtueller Laserstrahl auf der virtuellen Bedienoberfläche vorgesehen sein. Die Auswahl von Objekten wird hierdurch wesentlich erleichtert. Insbesondere können neben dem Justierungswert die an die Datenbrille übermittelten Messdaten im Anzeigemittel graphisch visualisiert werden, wo sie auf die gleiche Weise steuerbar sind wie die soeben beschriebenen Objekte.

Die Vorrichtung kann grundsätzlich eine beliebige Vorrichtung sein wie zum Beispiel Windkraftanlage oder eine oder mehrere beliebige Maschinen. So kann die Vorrichtung insbesondere ein drehbar gelagertes Maschinenteil umfassen, oder aber zwei Maschinen mit jeweiligen drehbar gelagerten Maschinenteilen. Die drehbar gelagerten Maschinenteile können jeweilige Drehachsen aufweisen, wobei die Maschinenteile insbesondere in solche vorgegebene Positionen relativ zueinander gebracht sind, in denen die Drehachsen miteinander fluchtend ausgerichtet sind. Bei den drehbar gelagerten Maschinenteilen kann es sich zum Beispiel um Achsen, Walzen oder Wellen handeln.

Zum Übermitteln der Messdaten an die Datenbrille kann entweder eine Kabelverbindung oder eine drahtlose Verbindung bzw. Datenübertragungsverbindung bzw. Kommunikationsverbindung zwischen der Datenbrille und dem Vibrationssensor vorgesehen sein, wobei eine drahtlose Verbindung für die Datenübertragung bevorzugt wird. Insbesondere kann die drahtlose Datenübertragung mittels einer WLAN- (Wireless Local Area Network) oder einer Bluetooth-Verbindung erfolgen. Sofern ein drahtloses Netzwerk mit geringem Datenaufkommen vorliegt, kann die Datenübertragung gemäß einer als ZigBee bezeichneten Spezifikation erfolgen.

Besonders bevorzugt werden zumindest die Schritte des Erfassens von Vibrationen der Vorrichtung mit dem Vibrationssensor und des Übermittelns von Messdaten an die Datenbrille während eines Betriebs der Vorrichtung ausgeführt. Es können aber auch zusätzlich einer oder beide Schritte des Verarbeitens der Messdaten durch das Datenverarbeitungsmittel und des Anzeigens des Ergebnisses der Verarbeitung am Anzeigemittel während eines Betriebs der Vorrichtung ausgeführt werden, oder es werden alle Verfahrensschritte während eines Betriebs der Vorrichtung ausgeführt. Das Ausführen dieser Schritte während eines Betriebs der Vorrichtung erlaubt ein Erfassen der Vibrationen der Vorrichtung bzw. eine Überwachung der Vorrichtung während ihres Betriebes permanent und in Echtzeit. Auftretende Störungen oder Unregelmäßigkeiten können damit umgehend erkannt und beseitigt werden, noch bevor es zu größeren Schäden an der Vorrichtung kommen kann.

Mithin ist die Datenübertragungsverbindung zwischen der Datenbrille und dem Vibrationssensor direkt ausgebildet. So kann im Schritt des Übermittelns der Messdaten eine direkte Datenübertragungsverbindung zwischen dem Vibrationssensor und der Datenbrille hergestellt werden.

Entsprechend kann bei dem Vibrationsüberwachungssystem eine direkte Datenübertragungsverbindung zwischen dem Vibrationssensor und der Datenbrille herstellbar sein.

Vorteilhaft wird von einem Bilderfassungsmittel der Datenbrille ein Bild wenigstens einer Kennzeichnung erfasst und auf Grundlage dieser Kennzeichnung wird von der Datenbrille auf gespeicherte Daten zugegriffen. Bei dem Bilderfassungsmittel kann es sich im einfachsten Fall um eine Foto- oder Filmkamera, und insbesondere um eine digitale Kamera handeln. Das Bilderfassungsmittel kann in Blickrichtung eines Trägers der Datenbrille ein oder mehrere Bilder dadurch erfassen, dass es sie aufzeichnet bzw. aufnimmt, wobei die aufgezeichneten bzw. aufgenommenen Bilder in einem Datenspeicher der Datenbrille oder in einem externen Speicher abgelegt werden können. So können für Protokoll- oder Dokumentationszwecke mit dem Bilderfassungsmittel auch Bilder von zum Beispiel defekten Teilen der Vorrichtung erfasst bzw. aufgenommen bzw. aufgezeichnet werden. Vorteilhaft kann ein Winkel zwischen dem Bilderfassungsmittel und einem Gestell der Datenbrille zur Vergrößerung des Aufnahmebereiches des Bilderfassungsmittels verstellbar sein. Sofern Informationen in das Sichtfeld des Benutzers projiziert werden, können diese Informationen mit vom Bilderfassungsmittel erfassten Bildern kombiniert werden. Zumeist weist das Anzeigemittel vorteilhaft einen internen Projektor und ein Prisma auf.

Abgesehen von Daten und Informationen wie Zahlenwerten, Zeichnungen, Plänen, Graphiken, Diagrammen, Filmen, Bildern, oder Texten, können im Anzeigemittel auch andere für die Instandhaltung der Vorrichtung relevante Informationen nach Art einer erweiterten Realität (Augmented Reality AR) im Anzeigemittel angezeigt werden. Bei einer vorteilhaften Ausführungsform der Erfindung können ferner bei auftretenden Problemen mit Hilfe des Anzeigemittels per Videokonferenz Experten hinzugezogen werden. Diese Experten können mittels des Bilderfassungsmittels die Situation direkt vor Ort begutachten, wobei sie den Träger der Datenbrille gegebenenfalls instruieren können, wo er hinzugehen und hinzuschauen hat. Somit kann der Experte eine Wartungsperson direkt beraten.

Ganz allgemein kann es sich bei der Kennzeichnung um ein beliebiges Zeichen oder einen Code handeln, wie zum Beispiel einen zweidimensionalen Code in der Art eines Strichcodes bzw. Barcodes oder einen QR-Code (Quick Response). Die Kennzeichnung kann an der Vorrichtung oder dem Vibrationssensor vorgesehen sein. Bei den gespeicherten Daten kann es sich beispielsweise um technische Daten oder Spezifikationen des Vibrationssensors oder der Vorrichtung oder um Abmessungen der Vorrichtung oder Teilen der Vorrichtung handeln. Nach Identifizierung und Zuordnung dieser Kennzeichnung durch die Datenbrille können einer Wartungsperson im Anzeigemittel der Datenbrille genau die Informationen zur Verfügung gestellt werden, die sie zur Wartung der Vorrichtung benötigt. Die gespeicherten Daten können dabei entweder in einem internen Speicher der Datenbrille oder in einem externen Speicher außerhalb der Datenbrille abgelegt sein. Im letzteren Fall kann die Datenbrille vorteilhaft zu einer kabelgebundenen oder einer drahtlosen Datenübertragungs- oder Kommunikationsverbindung mit wenigstens einem externen Gerät eingerichtet sein. Beispielsweise können über eine Schnittstelle der Datenbrille die Messwerte oder aus deren Verarbeitung gewonnene Ergebnisse von der Datenbrille an einen externen Speicher weitergeleitet werden. Darüber hinaus kann über eine derartige Schnittstelle auf einen in einer externen Instandhalterdatenbank abgelegten Auftrag zur Wartung der Vorrichtung zugegriffen werden, die anhand der erfassten Kennzeichnung identifiziert wird. Gerade durch das Internet ist es möglich, kontext-basiert relevante Informationen bereitzustellen.

Ferner ist es von Vorteil, wenn auf der Grundlage eines oder mehrerer erfasster Bilder geprüft wird, ob der Vibrationssensor auf eine vorgeschriebene Weise angeordnet ist, wobei ein Ergebnis dieser Prüfung im Anzeigemittel angezeigt wird. Dies erlaubt es, eventuelle fehlerhafte Positionierungen des Vibrationssensors rasch zu beheben.

In der Praxis sind in Aufträgen zur Wartung oder Überwachung von Vorrichtungen häufig die Standorte der betreffenden Vorrichtungen verzeichnet. Um Wartungspersonen die Auffindung der betreffenden Vorrichtung zu erleichtern, ist in einer bevorzugten Ausführungsform der Erfindung vorgesehen, dass im Anzeigemittel Informationen über einen Standort der Vorrichtung und/oder eine zu der Vorrichtung hinführende Richtungsanzeige angezeigt werden. Beispielsweise kann das Anzeigemittel einen Fabrikplan anzeigen, in dem die momentanen Standorte der Wartungsperson und der zu wartenden Vorrichtung markiert sind. Des Weiteren kann im Anzeigemittel ein Pfeil als Richtungsanzeige angezeigt werden, welcher der Wartungsperson angibt, in welche Richtung sie zu gehen hat, um auf kürzestem oder schnellstem Weg zu der zu wartenden Vorrichtung zu gelangen. In diesem Zusammenhang kann die Datenbrille vorteilhaft eine Schnittstelle aufweisen, mit der eine Verbindung zu einem Navigationssystem herstellbar ist, bei dem es sich beispielsweise um das GPS-System (Global Position System) oder ein System zur Indoor-Navigation handeln kann.

Bei einer weiteren bevorzugten Ausführung wird im Anzeigemittel ein Ablaufplan eines von einer Person auszuführenden Arbeitsverfahrens angezeigt. Beispielsweise kann ein entsprechendes Flussdiagramm bzw. ein Workflow zu bestimmten Wartungsarbeiten, Verfahren zum Ausrichten einer Drehachse eines drehbar gelagerten Teiles der Vorrichtung mit der Drehachse eines anderen drehbar gelagerten Teiles oder sonstiger Arbeitsabläufe angezeigt werden, dem die Wartungsperson jeweilige von ihr vorzunehmende Arbeitsschritte entnehmen kann.

Bei einigen Ausführungsbeispielen ist eine Steuerung des Vibrationssensors durch die Datenbrille vorgesehen. Hierzu werden von der Datenbrille Steuerbefehle an den Vibrationssensor gesendet. Auf diese Weise kann eine Steuerung des Vibrationssensors direkt durch die Datenbrille erfolgen, ohne dass hierfür eine zusätzliche oder gar externe Einrichtung vorgesehen oder eingerichtet werden müsste.

Nachfolgend wird die Erfindung anhand eines besonders bevorzugten Ausführungsbeispiels näher erläutert. Es zeigen:
- Figur 1: eine zu überwachende Vorrichtung mit einem Vibrationsüberwachungssystem ;
- Figur 2: eine Datenbrille des Vibrationsüberwachungssystems;
- Figur 3: ein nicht erfindungsgemäßes Vibrationsüberwachungssystem.

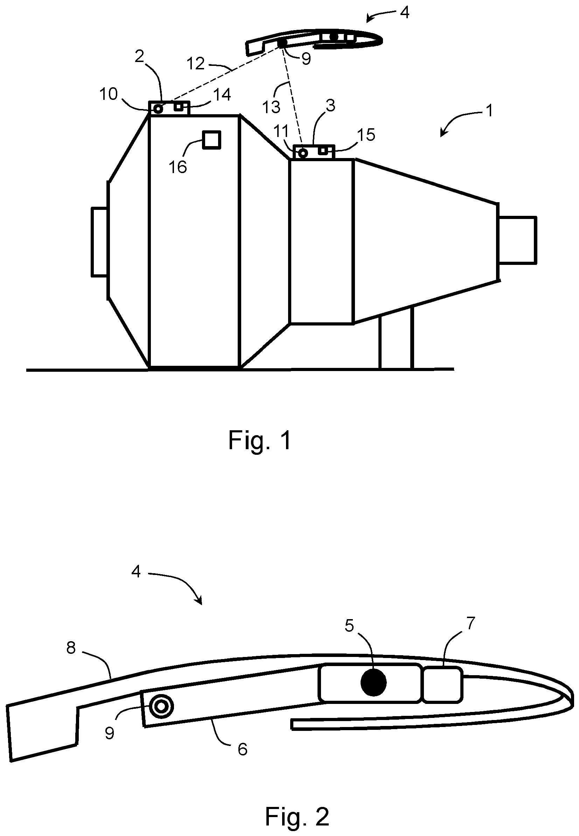

In der Figur 1 ist beispielhaft eine Vorrichtung dargestellt, bei der es sich um eine Maschine (1) handelt. Im Betrieb der Maschine (1) treten Vibrationen auf. Zur Erfassung dieser Vibrationen ist ein Vibrationsüberwachungssystem vorgesehen, das im vorliegenden Fall zwei Vibrationssensoren (2) und (3) sowie eine Datenbrille (4) umfasst. Grundsätzlich kann das Vibrationsüberwachungssystem aber auch nur einen Vibrationssensor aufweisen oder es kann mehr als zwei Vibrationssensoren aufweisen. Ganz allgemein kann das Vibrationsüberwachungssystem beliebig viele Vibrationssensoren aufweisen. Insbesondere kann das Vibrationsüberwachungssystem auch zwei oder mehr Datenbrillen aufweisen.

Figur 2 zeigt die Datenbrille (4) in einer vergrößerten Ansicht. Wie bekannte Datenbrillen auch weist die Datenbrille (4) des Vibrationsüberwachungssystems eine Kamera (5) als Bilderfassungsmittel, einen Prozessor (6) als Datenverarbeitungsmittel und ein Head-up-Display oder HUD (7) als Anzeigemittel auf. Dabei ist das HUD (7) derart angeordnet, dass es vor einem Auge eines Trägers der Datenbrille (4) positioniert ist. Grundsätzlich können gleichzeitig auch zwei HUDs für das linke und rechte Auge vorgesehen sein. Neben dem HUD (7) zum Ohr des Trägers der Datenbrille (4) hin ist die Kamera (5) angeordnet, während sich der Prozessor (6) in einem sich daran anschließenden Bügel (8) befindet. Ferner ist eine Schnittstelle (9) vorgesehen, über die eine drahtlose Datenübertragungsverbindung mit der Datenbrille (4) herstellbar ist.

Beide Vibrationssensoren (2) und (3) weisen ebenfalls Schnittstellen (10) und (11) auf, über die eine drahtlose Datenübertragungsverbindung mit den Vibrationssensoren (2) und (3) herstellbar ist. Genauer ist der Vibrationssensor (2) mit der Schnittstelle (10) versehen und der Vibrationssensor (3) ist mit der Schnittstelle (11) versehen. Über die Schnittstelle (10) des Vibrationssensors (2) und die Schnittstelle (9) der Datenbrille (4) ist eine in der Figur 1 gestrichelt gezeichnete drahtlose Datenübertragungsverbindung (12) zwischen dem Vibrationssensor (2) und der Datenbrille (4) herstellbar. Entsprechend ist über die Schnittstelle (11) des Vibrationssensors (3) und die Schnittstelle (9) der Datenbrille (4) eine in der Figur 1 gestrichelt gezeichnete drahtlose Datenübertragungsverbindung (13) zwischen dem Vibrationssensor (3) und der Datenbrille (4) herstellbar.

Ferner sind beide Vibrationssensoren (2) und (3) mit Kennzeichnungen (14) und (15) versehen, und zwar ist der Vibrationssensor (2) mit der Kennzeichnung (14) gekennzeichnet und der Vibrationssensor (3) ist mit der Kennzeichnung (15) gekennzeichnet. Eine weitere Kennzeichnung (16) ist an der Maschine (1) angebracht.

Zum Erfassen oder Überwachen von Vibrationen der Maschine (1) werden die Vibrationssensoren (2) und (3) zunächst an hierzu geeigneten Positionen an der Maschine (1) angebracht. Welches diese Positionen sind kann mittels der Datenbrille (4) ermittelt werden.

Hierzu nimmt ein Benutzer der Datenbrille (4) mit deren Kamera (5) ein Bild der an der Maschine (1) angebrachten Kennzeichnung (16) auf. Vom Prozessor (6) der Datenbrille (4) wird dieses Bild verarbeitet und die Maschine (1) anhand der Kennzeichnung (16) identifiziert.

Nun kann auf hinterlegte technische Spezifikationen oder Daten dieser Maschine (1) zugegriffen werden, die in einem internen Speicher der Datenbrille (4) oder in einem externen Speicher gespeichert sein können. Sofern die genannten Daten in einem externen Speicher oder einer externen Datenbank gespeichert sind, kann die Datenbrille (4) für den Zugriff auf den Speicher oder die Datenbank über eine entsprechende Schnittstelle zu einem Netzwerk verfügen, welches die Datenbrille (4) mit dem jeweiligen Speichersystem verbindet, beispielsweise einem LAN (Local Area Network), einem Intranet oder dem Internet. Für alle diese Zwecke kann insbesondere die oben beschriebene Schnittstelle (9) eingerichtet sein. Nach Herstellen einer Datenübertragungsverbindung über die Schnittstelle (9) zu dem externen Speicher ruft die Datenbrille (4) die Daten dort ab.

Wenn die genannten Daten dem Prozessor (6) vorliegen, werden aus diesen Daten sich ergebende jeweilige Positionen, an denen die Vibrationssensoren (2) und (3) auf der Maschine (1) anzuordnen sind, anschließend im HUD (7) angezeigt, damit der die Datenbrille (4) tragende Benutzer fehlerfrei und ohne großen Zeitaufwand die Anordnung der Vibrationssensoren (2) und (3) an den richtigen Positionen vornehmen kann.

Zur Überprüfung, ob die Vibrationssensoren (2) und (3) korrekt an der Maschine (1) angebracht und fixiert worden sind, kann mittels der Kamera (5) ein Bild von den Vibrationssensoren (2) und (3), und insbesondere von deren Kennzeichnungen (14) und (15), sowie deren Anordnung auf der Maschine (1) aufgenommen und vom Prozessor (6) ausgewertet werden. Anhand der Kennzeichnungen (14) und (15) ist es dem Prozessor (6) insbesondere möglich, die einzelnen Vibrationssensoren (2) und (3) voneinander zu unterscheiden. Das Ergebnis dieser Auswertung wird dem Benutzer im HUD (7) angezeigt, so dass er die Position der Vibrationssensoren (2) und (3) gegebenenfalls umgehend korrigieren kann.

Nach Anordnen der Vibrationssensoren (2) und (3) an der Maschine (1) können diese mit dem Erfassen von Vibrationen der Maschine (1) beginnen. Dabei werden von den Vibrationssensoren (2) und (3) Messdaten generiert, welche die erfassten Vibrationen repräsentieren.

Vom Vibrationssensor (2) generierte Messdaten werden über die Datenübertragungsverbindung (12), die zwischen der Schnittstelle (10) des Vibrationssensors (2) und der Schnittstelle (9) der Datenbrille (4) aufgebaut wird, an die Datenbrille (4) übertragen. Entsprechend werden vom Vibrationssensor (3) generierte Messdaten über die Datenübertragungsverbindung (13), die zwischen der Schnittstelle (11) des Vibrationssensors (3) und der Schnittstelle (9) der Datenbrille (4) aufgebaut wird, an die Datenbrille (4) übertragen. Ganz allgemein können Messdaten eines der Vibrationssensoren (2) oder (3) synchron oder intermittierend mit Messdaten des jeweiligen anderen Vibrationssensors (2) oder (3) an die Datenbrille (4) übertragen werden. Die Übertragung der Messdaten kann dabei während eines Betriebes der Maschine (1) erfolgen, um eine Überwachung der Maschine (1) in Echtzeit zu gewährleisten, oder erst nach Beendigung des Betriebs der Maschine (1) zur nachträglichen Analyse ihres Betriebes.

Über die Datenübertragungsverbindungen (12) und (13) ist es der Datenbrille (4) zudem möglich, Steuersignale an die Vibrationssensoren (2) und (3) zu übertragen. Beispielsweise kann die Datenbrille (4) hierdurch sowohl beim Vibrationssensor (2) als auch beim Vibrationssensor (3) den Beginn oder das Ende der Übertragung von Messdaten oder einen Betriebsmodus der Vibrationssensoren (2) und (3) steuern.

Vom Prozessor (6) werden die empfangenen Messdaten verarbeitet. Zum Beispiel kann der Prozessor (6) ermitteln, ob und zu welchen Zeiten von den Vibrationssensoren (2) und (3) erfasste Vibrationen einen oder mehrere Schwellenwerte überschritten haben. Oder aber der Prozessor (6) verarbeitet die Messdaten mit dem Ziel einer graphischen Visualisierung der erfassten Vibrationen. So kann die Zeitabhängigkeit von Amplituden oder Frequenzen der erfassten Vibrationen in entsprechenden Diagrammen angezeigt werden.

Schließlich wird ein Ergebnis dieser Verarbeitung im HUD (7) angezeigt. Bei dieser Anzeige kann es sich beispielsweise um ein Warnsignal handeln, sofern ein Schwellenwert von erfassten Vibrationen überschritten wurde. Es können aber auch aus den Messdaten erzeugte Diagramme im HUD (7) angezeigt werden. Anhand der Anzeige im HUD (7) kann ein Benutzer der Datenbrille (4) bzw. eine Bedien- oder Wartungsperson nötigenfalls entsprechende Maßnahmen zur Regulierung des Betriebs der Maschine (1) ergreifen.

Sowohl vor als auch während des Erfassens von Vibrationen durch die Vibrationssensoren (2) und (3), deren Übertragung an die Datenbrille (4), Verarbeitung durch den Prozessor (6) und Anzeigens des Ergebnisses der Verarbeitung im HUD (7) oder danach kann dem Benutzer im HUD (7) ein Ablaufplan oder Workflow eines Arbeitsvorganges angezeigt werden, der vom Benutzer auszuführen ist, um diesen zu jeder Zeit über nachfolgend vorzunehmende Arbeitsschritte zu informieren. Beispielsweise kann ein Workflow eines Wartungsvorganges angezeigt werden der vom Benutzer auszuführen ist, sofern die erfassten Vibrationen gewisse Eigenschaften aufweisen und beispielsweise einen Schwellenwert überschreiten. Aber auch Ablaufpläne von Arbeitsvorgängen, die während eines regulären Betriebs der Maschine (1) auszuführen sind, können im HUD (7) visualisiert werden.

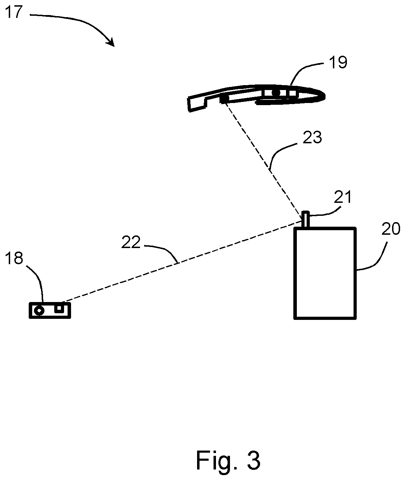

In der Figur 3 ist ein Vibrationsüberwachungssystem (17) gezeigt, das nicht unter den Schutzbereich der Ansprüche fällt. Wie das zuvor beschriebene Vibrationsüberwachungssystem umfasst auch das Vibrationsüberwachungssystem (17) Vibrationssensoren (18), von denen der Einfachheit halber in der Figur 3 nur einer gezeigt ist, und eine Datenbrille (19). Zusätzlich umfasst das Vibrationsüberwachungssystem (17) ein Zwischengerät (20) mit einer Schnittstelle (21), mittels der Kommunikationsverbindungen oder Datenübertragungsverbindungen (22) und (23) mit dem Zwischengerät (20) herstellbar sind. So kann eine Datenübertragungsverbindung (22) zwischen dem Vibrationssensor (18) und dem Zwischengerät (20) hergestellt werden und es kann eine Datenübertragungsverbindung (23) zwischen dem Zwischengerät (20) und der Datenbrille (19) hergestellt werden. Über die Datenübertragungsverbindungen (22) und (23) und das zwischengeschaltete Zwischengerät (20) kann somit eine indirekte Datenübertragungsverbindung zwischen dem Vibrationssensor (18) und der Datenbrille (19) hergestellt werden, über welche der Vibrationssensor (18) und die Datenbrille (19) Daten miteinander austauschen können, ohne direkt miteinander verbunden zu sein. Dabei kann das Zwischengerät (20) tragbar ausgeführt sein. Beispielsweise kann das Zwischengerät (20) am Gürtel eines Benutzers der Datenbrille (19) befestigbar sein.

Das Zwischengerät (20) erlaubt es, die Funktionalität des Vibrationsüberwachungssystems (17) zu erweitern. So kann das Zwischengerät (20) leistungsstarke Prozessoren mit verschiedensten Funktionen zur Verarbeitung oder Generierung von Daten und Steuerbefehlen aufweisen, die dem Zwischengerät (20) über die Datenübertragungsverbindungen (22) und (23) übermittelt werden oder die vom Zwischengerät (20) über die Datenübertragungsverbindung (22) an den Vibrationssensor (18) und die Datenübertragungsverbindung (23) an die Datenbrille (19) übertragen werden können. Zudem kann das Zwischengerät (20) über vergleichsweise große Datenspeicher verfügen, in denen Daten, die zu überwachende oder zu wartende Vorrichtungen betreffen wie zum Beispiel Handbücher oder technische Spezifikationen, abgelegt sein können, auf welche die Datenbrille (19) über die Datenübertragungsverbindung (23) zugreifen kann. In solchen Speichern können auch vom Vibrationssensor (18) über die Datenübertragungsverbindung (22) übermittelte Daten zur späteren Auswertung oder zu Dokumentationszwecken abgelegt werden oder für den späteren Zugriff durch die Datenbrille (19) zwischengespeichert werden. Schließlich kann das Zwischengerät (20) auch Energiequellen wie Batterien oder Akkumulatoren aufweisen, welche die Datenbrille (19) mit Energie versorgen.

### Bezuqszeichenliste

- 1.: Maschine
- 2.: Vibrationssensor
- 3.: Vibrationssensor
- 4.: Datenbrille
- 5.: Kamera
- 6.: Prozessor
- 7.: Head-up-Display
- 8.: Bügel
- 9.: Schnittstelle
- 10.: Schnittstelle
- 11.: Schnittstelle
- 12.: Datenübertragungsverbindung
- 13.: Datenübertragungsverbindung
- 14.: Kennzeichnung
- 15.: Kennzeichnung
- 16.: Kennzeichnung
- 17.: Vibrationsüberwachungssystem
- 18.: Vibrationssensor
- 19.: Datenbrille
- 20.: Zwischengerät
- 21.: Schnittstelle
- 22.: Datenübertragungsverbindung
- 23.: Datenübertragungsverbindung

## Patentansprüche

1. Verfahren zum Erfassen von Vibrationen einer Vorrichtung (1) mit den Schritten:
a) Anordnen von wenigstens einem Vibrationssensor (2, 3) eines Vibrationsüberwachungssystems auf der Vorrichtung (1);
b) Erfassen von Vibrationen der Vorrichtung (1) mit dem Vibrationssensor (2, 3);
c) Herstellen einer direkten Datenübertragungsverbindung (12, 13) zwischen dem Vibrationssensor (2, 3) und einer Datenbrille (4) des Vibrationsüberwachungssystems und Übermitteln von Messdaten, welche die erfassten Vibrationen repräsentieren, an die Datenbrille (4);
d) Verarbeiten der Messdaten durch ein Datenverarbeitungsmittel (6) der Datenbrille (4);
e) Anzeigen eines Ergebnisses der Verarbeitung an einem Anzeigemittel (7) der Datenbrille (4).

2. Verfahren nach Anspruch 1, bei dem zumindest die Schritte b) und c) während eines Betriebs der Vorrichtung (1) ausgeführt werden.

3. Verfahren nach einem der vorhergehenden Ansprüche, bei dem von einem Bilderfassungsmittel (5) der Datenbrille (4) ein Bild wenigstens einer Kennzeichnung (14, 15, 16) erfasst und auf Grundlage dieser Kennzeichnung (14, 15, 16) von der Datenbrille (4) auf gespeicherte Daten zugegriffen wird.

4. Verfahren nach einem der vorhergehenden Ansprüche, bei dem im Anzeigemittel (7) Informationen über einen Standort der Vorrichtung (1) und/oder eine zu der Vorrichtung (1) hinführende Richtungsanzeige angezeigt werden.

5. Verfahren nach einem der vorhergehenden Ansprüche, bei dem im Anzeigemittel (7) ein Ablaufplan eines von einer Person auszuführenden Arbeitsverfahrens angezeigt wird.

6. Verfahren nach einem der vorhergehenden Ansprüche, bei dem von der Datenbrille (4) Steuerbefehle an den Vibrationssensor (2, 3) gesendet werden.

7. Vibrationsüberwachungssystem zum Erfassen von Vibrationen einer Vorrichtung (1) mit wenigstens einem Vibrationssensor (2, 3), der zum Erfassen der Vibrationen auf der Vorrichtung (1) anbringbar ist, und wenigstens einer Datenbrille (4), die wenigstens ein Datenverarbeitungsmittel (6) und wenigstens ein Anzeigemittel (7) aufweist, wobei eine Datenübertragungsverbindung (12, 13) zwischen dem Vibrationssensor (2, 3) und der Datenbrille (4) herstellbar ist,
**dadurch gekennzeichnet, dass**
eine direkte Datenübertragungsverbindung (12, 13) zwischen dem Vibrationssensor (2, 3) und der Datenbrille (4) herstellbar ist.

8. Vibrationsüberwachungssystem nach Anspruch 7, bei dem die Datenbrille (4) ferner wenigstens einen Datenspeicher und/oder wenigstens ein Raumwinkelmessmittel und/oder wenigstens einen Beschleunigungssensor und/oder wenigstens einen 9-Achssensor und/oder wenigstens ein Gyroskop und/oder wenigstens ein Inklinometer und/oder wenigstens einen Kompass und/oder wenigstens ein Touchpad und/oder wenigstens einen Knochenleistenlautsprecher und/oder wenigstens eine Schnittstelle (9), über die eine Verbindung zu einem lokalen Netzwerk und/oder zum Internet und/oder zu einem Navigationssystem herstellbar ist, und/oder wenigstens einen USB-Anschluss und/oder wenigstens eine Stromquelle und/oder wenigstens eine Batterie und/oder wenigstens einen Akkumulator und/oder wenigstens eine berührungssensitive Stelle aufweist und/oder bei dem die Datenbrille (4) für eine manuelle Modifikation oder Bedienung graphisch oder holographisch angezeigter Elemente eingerichtet ist und/oder bei dem die Datenbrille (4) wenigstens teilweise mittels Augenlidschlägen steuerbar ist.

## Claims

1. Method for detecting vibrations of a device (1), having the steps of:
a) arranging at least one vibration sensor (2, 3) of a vibration monitoring system on the device (1);
b) detecting vibrations of the device (1) using the vibration sensor (2, 3);
c) establishing a direct data transmission connection (12, 13) between the vibration sensor (2, 3) and data glasses (4) of the vibration monitoring system, and transmitting measurement data representing the detected vibrations to the data glasses (4);
d) processing the measurement data by means of a data processing means (6) of the data glasses (4);
e) displaying a result of the processing on a display means (7) of the data glasses (4).

2. Method according to Claim 1, in which at least steps b) and c) are carried out during operation of the device (1) .

3. Method according to one of the preceding claims, in which an image capture means (5) of the data glasses (4) captures an image of at least one identification (14, 15, 16) and the data glasses (4) access stored data on the basis of this identification (14, 15, 16).

4. Method according to one of the preceding claims, in which information relating to a location of the device (1) and/or a direction display leading to the device (1) is/are displayed in the display means (7).

5. Method according to one of the preceding claims, in which a schedule of a procedure to be carried out by a person is displayed in the display means (7).

6. Method according to one of the preceding claims, in which the data glasses (4) transmit control commands to the vibration sensor (2, 3).

7. Vibration monitoring system for detecting vibrations of a device (1), having at least one vibration sensor (2, 3), which can be fitted to the device (1) for the purpose of detecting the vibrations, and at least one set of data glasses (4) having at least one data processing means (6) and at least one display means (7), a data transmission connection (12, 13) being able to be established between the vibration sensor (2, 3) and the data glasses (4),
**characterized in that**
a direct data transmission connection (12, 13) can be established between the vibration sensor (2, 3) and the data glasses (4).

8. Vibration monitoring system according to Claim 7, in which the data glasses (4) also have at least one data memory and/or at least one spatial angle measuring means and/or at least one acceleration sensor and/or at least one nine-axis sensor and/or at least one gyroscope and/or at least one inclinometer and/or at least one compass and/or at least one touchpad and/or at least one bone-conduction loudspeaker and/or at least one interface (9), which can be used to establish a connection to a local area network and/or to the Internet and/or to a navigation system, and/or at least one USB connection and/or at least one current source and/or at least one battery and/or at least one rechargeable battery and/or at least one touch-sensitive point, and/or in which the data glasses (4) are set up to manually modify or operate graphically or holographically displayed elements, and/or in which the data glasses (4) can be at least partially controlled by means of blinks.

## Revendications

1. Procédé pour détecter des vibrations d'un dispositif (1), comprenant les étapes suivantes :
a) disposition d'au moins un capteur de vibrations (2, 3) d'un système de surveillance de vibrations sur le dispositif (1) ;
b) détection des vibrations du dispositif (1) avec le capteur de vibrations (2, 3) ;
c) établissement d'une liaison de transmission de données (12, 13) directe entre le capteur de vibrations (2, 3) et des lunettes connectées (4) du système de surveillance de vibrations et communication de données de mesure, lesquelles représentent les vibrations détectées, aux lunettes connectées (4) ;
d) traitement des données de mesure par un moyen de traitement de données (6) des lunettes connectées (4) ;
e) affichage d'un résultat du traitement sur un moyen d'affichage (7) des lunettes connectées (4).

2. Procédé selon la revendication 1, avec lequel au moins les tapes b) et c) sont exécutées pendant un fonctionnement du dispositif (1).

3. Procédé selon l'une des revendications précédentes, avec lequel une image d'au moins une identification (14, 15, 16) est acquise par un moyen d'acquisition d'images (5) des lunettes connectées (4) et les lunettes connectées (4) accèdent à des données mémorisées sur la base de cette identification (14, 15, 16).

4. Procédé selon l'une des revendications précédentes, avec lequel des informations à propos d'un emplacement du dispositif (1) et/ou un indicateur de direction qui mène au dispositif (1) sont affichées dans le moyen d'affichage (7).

5. Procédé selon l'une des revendications précédentes, avec lequel un plan de déroulement d'un procédé de travail à exécuter par une personne est affiché dans le moyen d'affichage (7).

6. Procédé selon l'une des revendications précédentes, avec lequel des instructions de commande sont envoyées par les lunettes connectées (4) au capteur de vibrations (2, 3).

7. Système de surveillance de vibrations destiné à détecter des vibrations d'un dispositif (1), comprenant au moins un capteur de vibrations (2, 3), lequel peut être monté sur le dispositif (1) pour détecter les vibrations, et au moins une paire de lunettes connectées (4), qui possèdent au moins un moyen de traitement de données (6) et au moins un moyen d'affichage (7), une liaison de transmission de données (12, 13) pouvant être établie entre le capteur de vibrations (2, 3) et les lunettes connectées (4),
**caractérisé en ce que**
une liaison de transmission de données (12, 13) directe peut être établie entre le capteur de vibrations (2, 3) et les lunettes connectées (4).

8. Système de surveillance de vibrations selon la revendication 7, avec lequel les lunettes connectées (4) possèdent en outre au moins une mémoire de données et/ou au moins un moyen de mesure d'angle solide et/ou au moins un capteur d'accélération et/ou au moins un capteur à 9 axes et/ou au moins un gyroscope et/ou au moins un inclinomètre et/ou au moins une boussole et/ou au moins une tablette tactile et/ou au moins un haut-parleur à conduction osseuse et/ou au moins une interface (9), par le biais de laquelle peut être établie une liaison avec un réseau local et/ou avec l'Internet et/ou avec un système de navigation, et/ou au moins un port USB et/ou au moins une source de courant et/ou au moins une pile et/ou au moins un accumulateur et/ou au moins un point sensible au toucher et/ou avec lequel les lunettes connectées (4) sont conçues pour une modification ou une commande manuelle d'éléments affichés de manière graphique ou holographique et/ou avec lequel les lunettes connectées (4) peuvent être commandées au moins partiellement au moyen de battements de paupières.
